# EUROPÄISCHE PATENTANMELDUNG

(11) **EP 0 903 923 A2**
(43) Veröffentlichungstag der Anmeldung: **24.03.1999**
(21) Anmeldenummer: 98440188.5
(22) Anmeldetag: 28.08.1998
(51) Int. Cl.: H04M 3/50, H04M 3/42, H04Q 11/04

(54) **Verfahren zum Weiterleiten von Notrufen**

(30) Priorität: 20.09.1997 DE 19741576
(71) Anmelder: ALCATEL, 75088 Paris (FR)
(72) Erfinder: Lautenschlager, Wolfgang, 71287 Weissach-Flacht (DE); Weik, Hartmut, 70195 Stuttgart (DE); Krank, Lothar, 71229 Leonberg (DE); Stahl, Uwe, 71229 Leonberg (DE)
(74) Vertreter: Zinsinger, Norbert

(57) **Zusammenfassung**

Bei einem Verfahren zum Weiterleiten von Anrufen, insbesondere von Notrufen, mit regional oder bundesweit einheitlicher Zentralrufnummer, die von einem Telekomunikations(TK)-Teilnehmer in einem öffentlich zugänglichen digitalen TK-Netz abgesetzt werden, an die jeweils örtlich zuständige Anrufzentrale wird eine im Anrufsignal enthaltene Kennung des den Anruf absetzenden TK-Teilnehmers in einer datenbankgestützten Einrichtung, in der zumindest der Standort des anrufenden TK-Teilnehmers gespeichert ist, seinem Standort zugeordnet, wird anhand des zugeordneten Standorts die passende, nächstliegende zuständige Anrufzentrale herausgesucht, und wird der Anruf an diese zuständige Anrufzentrale durchgeschaltet. Bei einer Durchbrechung der geographischen Zuordnung von Rufnummern anhand ihrer Ortsnetzkennzahl und/ oder Rufnummer kann mit Hilfe einer zentralen Rufnummer/ Standort-Datenbank anhand der Kennung der Standort sicher ermittelt und der Anruf an die örtlich zuständige Anrufzentrale weitergeleitet werden.

## Beschreibung

Die vorliegende Erfindung betrifft ein Verfahren zum Weiterleiten von Anrufen mit regional oder bundesweit einheitlicher Rufnummer, die von einem Telekommunikations(TK) - Teilnehmer in einem öffentlich zugänglichen digitalen TK-Netz abgesetzt werden, an die jeweils örtlich zuständige Anrufzentrale.

Ein derartiges Weiterleitungsverfahren ist z.B. durch die DE 35 90 468 T1 bekanntgeworden.

Heutzutage wird der Notruf über die bundesweit einheitlichen Kennzahlen 110 und 112 abgewickelt, wobei beim Wählen dieser Kennzahlen zur Ursprungskennung dem Anrufsignal noch eine der jeweiligen Ortsnetzkennzahl (ONKZ) entsprechende Ziffernfolge hinzugefügt wird. Entsprechend dieser Ursprungskennung, d.h. dem physikalischen Ursprung eines Notrufs, wird über die zuständige Vermittlungsstelle die der Vermittlungsstelle zugeordnete, zuständige örtliche Notrufzentrale angesteuert.

Während bisher durch eine feste Zuordnung der jeweiligen Telefonnummer zu einer Vermittlungsstelle an einem bestimmten Ort die Rufnummer bereits eine eindeutige Standortkennung enthält, wird in Zukunft bei Vergabe von Rufnummern durch mehrere unterschiedliche Anbieter eine Zuordnung des Standorts des entsprechenden Endgeräts aufgrund der Rufnummer nicht mehr möglich sein. Auch wird es TK-Teilnehmer geben, die beispielsweise bei einem Umzug innerhalb eines Ortsnetzes ihre Rufnummer mitnehmen wollen. Dies wird die Ermittlung der richtigen örtlichen zuständigen Notrufzentrale schwieriger bzw. unmöglich machen, wenn im existierenden Ortsnetz eine verdeckte Numerierung durch die Lage der Vermittlungsstellen vorgegeben ist und der Teilnehmer sich in einen anderen Stadtteil mit einer anderen Kennung begibt. Auch in diesen Fällen muß aber sichergestellt sein, daß der Notruf eines einzigen Teilnehmers zu einer anderen, nämlich der örtlich zuständigen Notrufzentrale weitergeleitet wird. Außerdem kann es Vermittlungsstellen geben, die mehrere Notrufzentralen in unterschiedlichen Ortsnetzen adressieren müssen.

Bei dem aus der DE 35 90 468 T1 bekannten Weiterleitungsverfahren wird, falls irgendeine Notrufzentrale einen Nachtdienstanschluß aufweist oder aus irgendeinem Grund außer Betrieb ist, ein Anruf von einem TK-Teilnehmer automatisch zu einer anderen Notrufzentrale umgeleitet. Die TK-Einrichtung des Teilnehmers ist derart programmiert, daß bei einem Notruf zunächst eine vorbestimmte erste Notrufzentrale angerufen wird. Dazu ist ein Code entsprechend der Nummer für die erste Notrufzentrale normalerweise in einem Speicher in der Teilnehmereinrichtung gespeichert. Wenn bei einem Anruf kein Bestätigungssignal von der ersten Notrufzentrale erhalten wird, wird nach einer vorgegebenen Wartezeit zu einer anderen vorbestimmten zweiten Notrufzentrale weitergeleitet. Bei einem Umzug des Teilnehmers würde dieses Weiterleitungsverfahren eine entsprechende Änderung der vorprogrammierten Notrufzentralen und ihrer Reihenfolge erfordern.

Auch aus der DE 33 21 416 C2 ist ein System zur Übermittlung von Notrufen bekannt, bei dem das Notrufsignal eine Kennung des Notrufteilnehmergeräts enthält. Da in einem Rufnummernspeicher die Zuordnung der Kennungen zu den Rufnummern der begrenzten Notrufteilnehmergeräte gespeichert ist, kann aufgrund dieser Kennung erkannt werden, von welchem der vielen Notrufteilnehmergeräte der Anruf kommt. Allerdings werden auch bei diesem Übermittlungssystem die abgegebenen Notrufe entsprechend ihrer Ortsnetzkennzahl an die zugeordnete, jeweils zuständige Notrufzentrale weitergeleitet.

Weiterhin ist aus der US 4,872,194 ein Übertragungsverfahren für Notrufe bekannt, bei dem bei Abgabe eines Notrufs mit Hilfe eines Diskriminators entsprechende Notrufzentralen angewählt werden. Hier erfolgt die Auswahl der jeweils zuständigen Notrufzentrale anhand der jeweils gewählten Telefonnummer.

Schließlich ist durch die US 4,051,327 noch ein Telefon-Alarmsystem bekannt, bei dem in einem Speicher einer Sende- oder Anrufeinheit eine codierte Wortinformation gespeichert ist, die die Sende- oder Anrufeinheit eindeutig identifiziert und auch Informationen wie z.B. die Telefonnummer der Empfangseinheit speichert.

Es ist demgegenüber Aufgabe der vorliegenden Erfindung, ein Weiterleitungsverfahren der eingangs genannten Art derart weiterzubilden, daß ein Anruf in Abhängigkeit des Standorts des anrufenden TK-Teilnehmers an die jeweils örtlich zuständige Anrufzentrale weitergeleitet werden kann.

Diese Aufgabe wird erfindungsgemäß dadurch gelöst, daß eine im Anrufsignal enthaltene Kennung des den Anruf absetzenden TK-Teilnehmers in einer datenbankgestützten Einrichtung (z.B. in einem Intelligenten Netz (IN)), in der zumindest der Standort des anrufenden TK-Teilnehmers gespeichert ist, seinem Standort zugeordnet wird, daß anhand des zugeordneten Standorts die passende, nächstliegende zuständige Anrufzentrale herausgesucht wird und daß der Anruf an diese zuständige Anrufzentrale durchgeschaltet wird.

Dieses Weiterleitungsverfahren hat den wesentlichen Vorteil, daß bei einer Durchbrechung der geographischen Zuordnung von Rufnummern anhand ihrer Ortsnetzkennzahl und/oder Rufnummer dennoch mit Hilfe einer zentralen Rufnummer/Standort-Datenbank (Intelligentes Netz) anhand der Kennung der Standort sicher ermittelt und der Anruf an die örtlich zuständige Anrufzentrale entsprechend weitergeleitet werden kann.

Vorzugsweise werden insbesondere Notrufe an die nächstliegende zuständige Notrufzentrale weitergeleitet, wobei die gewählten Ziffern für die Notrufe, z. B. 110 oder 112 (Notrufsequenz) dazu führen, daß diese Anrufe bzw. Anrufsignale zunächst zum Intelligenten Netz geführt werden. Falls die örtlich nächste, eigentlich zuständige Notrufzentrale nicht erreichbar, gestört oder außer Betrieb ist, wird der Notruf mit Hilfe des Intelligenten Netzes an eine entsprechende andere Notrufzentrale umgeleitet.

Dabei wird in einer besonderen Ausgestaltung des Weiterleitungsverfahrens zur Kennung des den Anruf absetzenden TK-Teilnehmers eine mit dem Anrufsignal mitübertragene Rufnummeridentifikation (Anschlußkennung) verwendet. Als Anschlußkennung kann eine sog. Calling Line Identification (CLI) verwendet werden. Dieses CLI-Kennung ist im Anrufsignal enthalten und wird bisher z.B. in ISDN-Leitungen dazu genutzt, um dem Angerufenen die Telefonnummer des Anrufenden vorab anzuzeigen. In Zukunft sind auch Dienste wie z.B. UPT (Universal Personal Telecommunication) denkbar, bei denen der Teilnehmer eine UPT-Rufnummer erhält und sich an jedem Telefon eines Festnetzes "einloggen" kann. Dann entspricht die Anschlußkennung der physikalischen Netzadresse, d.h. im Beispiel der Rufnummer, mit der sich der UPT-Teilnehmer eingeloggt hat.

Wenn ein Notruf abgesetzt wird, erkennt das System die Notrufsequenz im Anrufsignal, und die Anrufe werden der Datenbank bzw. dem Intelligenten Netz zugeführt. Die Rufnummer/ Anschlußkennung des Anrufenden bzw. wählenden Teilnehmers steht z.B. als CLI zur Verfügung. Mit dem erfindungsgemäßen Weiterleitungsverfahren ist eine anschlußindividuelle und damit korrekte Weiterleitung von Anrufen mit regional oder bundesweit einheitlicher Zentralrufnummer, insbesondere von Notrufen, möglich, wobei herkömmliche TK-Teilnehmergeräte verwendet werden können.

Die Funktionsweise des erfindungsgemäßen Weiterleitungsverfahrens ist wie folgt:
1. Ein Anrufsignal mit einer Notrufsequenz, z.B. 110 oder 112, triggert das Intelligente Netz.
2. Mit der im Anrufsignal enthaltenen Anschlußkennung (CLI) wird die Datenbankabfrage getriggert, die eine anschlußindividuelle Standortkennung, im allgemeinen Wohnort-bzw. Adresskennung, liefert. Vorzugsweise handelt es sich dabei um eine zweistufige Übersetzung, bei der aus der Anschlußkennung zunächst die Standortkennung und aus dieser die örtlich zuständige Notrufzentrale ermittelt werden.
3. In gegebenenfalls einem weiteren Schritt wird aus der Standortkennung die zugehörige örtliche bzw. die zur Entgegennahme eines Anrufs bereite Notrufzentrale ermittelt. Die Verteilung auf verschiedene Notrufzentralen, in Abhängigkeit der Tageszeit und des Wochentags, kann über einen IN-Mechanismus erfolgen.
4. Weiterleitung aller anrufrelevanten Daten zu einer Notrufzentrale ist auf der Basis konventioneller Endgeräte möglich. Eine Anzeige bei der Notrufzentrale ist bei einfachen Endgeräten nicht möglich. Hingegen ist bei Endgeräten mit Display (ISDN, ADSI) bei der Notrufzentrale eine minimale Anzeige möglich, wobei die Übermittlung der Information inband (z.B. Modemsignalisierung) oder outband (z.B. ISDN User-to-User Signalisierung) erfolgen kann.
5. Auch die Weiterleitung aller anrufrelevanten Daten zu einer Bildschirmdatensichtstation, d.h., die Kopplung mit einem Datensichtgerät, z.B. PC, ist möglich, wobei die anzuzeigenden Daten über eine Signalisierung oder parallel über ein zusätzliches, mit der Datenbank verbundenes Datennetz übertragen werden können.

Es sind auch andere Ausführungsbeispiele denkbar, wie z. B. Auswertung in der Vermittlungsstelle oder im Access-Equipment.

## Patentansprüche

1. Verfahren zum Weiterleiten von Anrufen mit regional oder bundesweit einheitlicher Zentralrufnummer, die von einem Telekomunikations(TK)-Teilnehmer in einem öffentlich zugänglichen digitalen TK-Netz abgesetzt werden, an die jeweils örtlich zuständige Anrufzentrale,
dadurch gekennzeichnet,
daß eine im Anrufsignal enthaltene Kennung des den Anruf absetzenden TK-Teilnehmers in einer datenbankgestützten Einrichtung, in der zumindest der Standort des anrufenden TK-Teilnehmers gespeichert ist, seinem Standort zugeordnet wird,
daß anhand des zugeordneten Standorts die passende, nächstliegende zuständige Anrufzentrale herausgesucht wird und
daß der Anruf an diese zuständige Anrufzentrale durchgeschaltet wird.

2. Weiterleitungsverfahren nach Anspruch 1, dadurch gekennzeichnet, daß Notrufe an die nächstliegende zuständige Notrufzentrale weitergeleitet werden.

3. Weiterleitungsverfahren nach Anspruch 1 oder 2, dadurch gekennzeichnet, daß zur Kennung des den Anruf absetzenden TK-Teilnehmers eine mit dem Anrufsignal mitübertragene Rufnummeridentifikation (Anschlußkennung) verwendet wird.
